(19) Europäisches Patentamt
European Patent Office
Office européen des brevets

(11) **EP 3 878 707 B1**

(12) **FASCICULE DE BREVET EUROPEEN**

(45) Date de publication et mention
de la délivrance du brevet:
**24.08.2022 Bulletin 2022/34**

(21) Numéro de dépôt: **21161946.5**

(22) Date de dépôt: **11.03.2021**

(51) Classification Internationale des Brevets (IPC):
***B61B 12/06*** (2006.01)          ***G01H 1/00*** (2006.01)

(52) Classification Coopérative des Brevets (CPC):
**B61B 12/06; G01H 1/00;** G01H 1/003

(54) **PROCÉDÉ DE CONTRÔLE D'UNE INSTALLATION DE TRANSPORT DE VÉHICULES PAR UN CÂBLE À MOUVEMENT CONTINU ET DISPOSITIF CONFIGURÉ POUR METTRE EN OEUVRE LE PROCÉDÉ**

VERFAHREN ZUR KONTROLLE EINER FAHRZEUG-TRANSPORTANLAGE MITTELS EINES SICH KONTINUIERLICH BEWEGENDEN KABELS, UND VORRICHTUNG, DIE FÜR DIE DURCHFÜHRUNG DES VERFAHRENS KONFIGURIERT IST

METHOD OF CONTROLLING AN INSTALLATION FOR TRANSPORTING VEHICLES USING A CONTINUOUSLY MOVING CABLE AND A DEVICE CONFIGURED TO IMPLEMENT THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2020 FR 2002409**

(43) Date de publication de la demande:
**15.09.2021 Bulletin 2021/37**

(73) Titulaire: **Bureau des Etudes de Câbles**
**92260 Fontenay-aux-Roses (FR)**

(72) Inventeur: **Bécu, Hugo**
**92260 Fontenay-aux-Roses (FR)**

(74) Mandataire: **Alatis**
**3 rue Paul Escudier**
**75009 Paris (FR)**

(56) Documents cités:
**EP-A1- 0 618 380     CN-A- 104 097 644**
**US-A- 5 778 797**

## Description

La présente invention se rapporte au domaine des installations de transport telles que les téléportés. L'invention concerne, plus particulièrement, les installations de transport à mouvement continu et à va-et-vient, par exemple munies d'au moins un câble mobile, notamment aérien, relié à un ou plusieurs véhicules.

Différents types de téléportés ou installation de transport par câble existent. Certaines de ces installations de transport utilisent un câble tracteur situé au niveau du sol, comme les funiculaires. D'autres installations utilisent un ou plusieurs câbles tracteurs aériens, tels que les téléphériques, les télécabines, les funitels et DMC, les télésièges, ou encore les téléportés avec sièges et cabines. Ces installations de transport permettent le déplacement d'un ou plusieurs véhicules. Ces véhicules rendent possible l'acheminement de voyageurs et/ou de matériels entre plusieurs endroits. Ces véhicules sont également appelés cabines, bennes ou sièges.

Pour une installation de transport par câbles, le comportement dynamique en régime permanent dépend principalement des paramètres suivants : la masse déplacée le long du ou des câbles, la distance entre deux véhicules successifs présents le long du ou des câbles, la vitesse de défilement du ou des câbles mobiles, et la valeur de la tension mécanique imposée au(x) câble(s).

Dans des configurations précises de ces paramètres, le comportement dynamique de l'installation peut prendre la forme d'un phénomène oscillatoire basse fréquence aussi appelé phénomène de pompage. Le phénomène de pompage se traduit par un mouvement élastique du câble qui peut s'accompagner d'un mouvement pendulaire des véhicules. Le mouvement pendulaire des véhicules peut être longitudinal dans la direction de transport et/ou transversalement par rapport à la direction de transport, par exemple en cas de vent. Un mouvement élastique du câble selon un axe parallèle à la direction du champ de gravité terrestre est le plus souvent observé mais il peut être aussi selon un axe transversal à la direction de transport. Ces phénomènes oscillatoires sont dangereux car les véhicules peuvent entrer en collision avec des bâtiments d'exploitation, avec des supports du système, et/ou peuvent être inconfortables, voire dangereux, pour les voyageurs en provoquant par exemple le mal des transports parmi ces derniers.

Les comportements dynamiques sont difficiles à anticiper et à prévoir compte tenu de leurs origines et de la complexité du système de transport. Le mouvement des câbles et/ou des véhicules est dicté par des paramètres dont l'évolution est aléatoire, comme par exemple la température, le vent, l'affluence des passagers ou encore l'usure mécanique, et par des paramètres déterministes, par exemple les paramètres liés aux contraintes mécaniques. La description du comportement dynamique du système de transport nécessite ainsi d'avoir accès à des valeurs de paramètres mesurées directement sur le système de transport au cours de son fonctionnement. Or les dispositifs de commande actuels des systèmes de transport par câbles ne tiennent pas compte de l'évolution continue de l'installation de transport par câbles selon les conditions d'exploitation. De plus, ces dispositifs de commande ne sont pas conçus pour agir comme des « amortisseurs actifs » face aux oscillations rencontrées sur les installations de transport par câbles. Le document EP 0 618 380 AI décrit un procédé de contrôle d'une installation de transport de véhicules par au moins un câble à mouvement continu comprenant une étape de détermination d'au moins une oscillation d'au moins un des véhicules en fonction de la masse moyenne transportée par ce véhicule.

La présente invention a pour objet de palier au moins un des inconvénients précités et de conduire en outre à d'autres avantages en proposant un nouveau type de procédé de contrôle d'une installation de transport de véhicules par un câble en mouvement continu.

Un autre but de l'invention est d'améliorer le confort des passagers ainsi que leur sécurité durant leur transport par l'installation de transport de véhicules par un câble à mouvement continu.

Selon un mode de réalisation, l'invention fournit un procédé de contrôle d'une installation de transport de véhicules par au moins un câble à mouvement continu, le procédé comprenant une étape de détermination d'au moins une oscillation du câble et/ou d'au moins un des véhicules en fonction d'au moins un paramètre choisi parmi les paramètres suivants : une tension moyenne du câble, une vitesse moyenne du câble, une distance entre deux véhicules successifs, et une masse moyenne transportée par les véhicules, une étape de génération d'une base de données qui relient une valeur de l'oscillation à une combinaison de la tension moyenne du câble, la vitesse moyenne du câble, la distance entre deux véhicules successifs, et la masse moyenne transportée par les véhicules, et une étape de réduction de l'oscillation en faisant varier un ou plusieurs paramètres à faire varier parmi les paramètres selon la base de données.

L'invention permet ainsi de supprimer voire d'anticiper un comportement oscillatoire inconfortable, voire dangereux, d'au moins un câble et/ou d'au moins un des véhicules portés par le câble grâce à une mesure d'une oscillation du câble et/ou d'au moins un des véhicules et d'une base de données reliant une oscillation du câble et/ou d'au moins un des véhicules aux paramètres de l'installation.

Selon un mode de réalisation, la valeur de l'oscillation est une amplitude de l'oscillation. En d'autres termes, une amplitude de l'oscillation correspond à l'amplitude des phénomènes vibratoires qui affectent l'installation de transport.

Selon un mode de réalisation, l'oscillation est un mouvement oscillatoire périodique établi.

Selon un mode de réalisation, l'étape de génération de la base de données fait partie d'un cycle d'apprentissage. Le cycle d'apprentissage est généralement initié avant la mise en service commercial de l'installation de transport et/ou pendant l'exploitation commerciale de l'installation de transport.

Selon un mode de réalisation, les véhicules sont uniformément répartis sur le câble.

Selon un mode de réalisation, l'étape de génération de la base de données comprend une première sous-étape d'échantillonnage d'oscillations, chaque oscillation étant associée à la mesure de la tension moyenne du câble, la vitesse moyenne du câble, la distance entre deux véhicules successifs, et la masse moyenne transportée par les véhicules. Cette première sous-étape peut être effectuée avant l'exploitation commerciale de l'installation de transport de véhicules par un câble à mouvement continu.

Selon un mode de réalisation, l'étape de génération de la base de données comprend une deuxième sous-étape d'extrapolation des données obtenues lors de la première sous-étape d'échantillonnage pour compléter la base de données.

Selon un mode de réalisation, la première sous-étape d'échantillonnage comprend un enrichissement de la base de données avec au moins une oscillation, l'oscillation étant associée à la mesure de la tension moyenne du câble, la vitesse moyenne du câble, la distance entre deux véhicules successifs, et la masse moyenne transportée par les véhicules, obtenue pendant l'exploitation de l'installation de transport de véhicules par un câble à mouvement continu.

Selon un mode de réalisation, la première sous-étape d'échantillonnage est opérée lorsque l'installation de transport de véhicules par un câble à mouvement continu fonctionne en régime permanent.

Il faut entendre ici, ainsi que dans tout ce qui suit, par « régime permanent » que les paramètres de l'installation de transport de véhicules par un câble à mouvement continu sont sensiblement constants dans le temps lorsque l'installation de transport de véhicules par un câble à mouvement continu est en fonctionnement.

Il faut entendre ici et dans tout ce qui suit, par « sensiblement » que les paramètres varient de +/-10% dans le temps par rapport à une valeur moyenne.

Selon un mode de réalisation, le procédé de contrôle comprend une étape de comparaison entre la valeur d'oscillation et une valeur seuil au-dessus de laquelle une oscillation est interdite et en dessous de laquelle une oscillation est autorisée.

Selon un mode de réalisation, l'étape de réduction de l'oscillation comprend une sous-étape d'optimisation d'un premier paramètre à faire varier parmi le ou les paramètres à faire varier, pour que la valeur de l'oscillation soit minimale.

Selon un mode de réalisation, la sous-étape d'optimisation est directement opérée après l'étape de comparaison lorsque la valeur d'oscillation est inférieure à la valeur seuil.

Selon un mode de réalisation, l'étape de réduction de l'oscillation comprend une sous-étape d'amélioration du premier paramètre à faire varier en choisissant une valeur dudit premier paramètre à faire varier dans la base de données lorsque la valeur d'oscillation est supérieure à la valeur seuil afin d'amener la valeur d'oscillation à une valeur inférieure à la valeur seuil, la sous-étape d'amélioration étant effectuée avant la sous-étape d'optimisation.

Selon un mode réalisation, l'étape de réduction de l'oscillation comprend une sous-étape d'ajustement du premier paramètre à faire varier pour amener la valeur dudit premier paramètre à faire varier à la valeur optimisée.

Selon un mode de réalisation, l'étape de réduction de l'oscillation comprend une sous-étape de vérification de la possibilité d'atteindre la valeur optimisée du premier paramètre à faire varier, dans la négative un autre paramètre parmi le ou les paramètres à faire varier est ajusté.

Selon un mode de réalisation, l'étape de réduction de l'oscillation comprend une sous-étape de vérification de la possibilité d'atteindre la valeur optimisée du premier paramètre à faire varier, dans l'affirmative la valeur dudit premier paramètre est ajustée à la valeur optimisée.

Selon un mode de réalisation, la sous-étape étape de vérification est opérée en suivant la sous-étape d'ajustement.

Selon un mode de réalisation, le procédé comprend une étape d'enregistrement de la valeur optimisée du premier paramètre à faire varier en fonction d'une valeur de consigne du premier paramètre à faire varier pour générer une bibliothèque de données.

Selon un mode de réalisation, la réduction de l'oscillation s'opère en agissant sur la vitesse moyenne du câble et/ou la tension moyenne du câble.

Selon un mode de réalisation, la sous-étape d'optimisation comprend une phase de variation de la valeur du paramètre à faire varier, une phase de lecture d'une valeur de l'oscillation avant et après la phase de variation du paramètre à faire varier, une phase de comparaison de la valeur de l'oscillation avant et après la phase de variation du paramètre à faire varier, et une phase de confirmation de la réduction de l'oscillation, dans l'affirmative, le procédé retourne à la phase de variation.

Selon un mode de réalisation, la sous-étape d'optimisation comprend une phase de variation de la valeur du paramètre à faire varier, une phase de lecture d'une valeur de l'oscillation avant et après la phase de variation du paramètre à faire varier, une phase de comparaison de la valeur de l'oscillation avant et après la phase de variation du paramètre à faire varier, et une phase de confirmation de la réduction de l'oscillation, dans la négative, le paramètre amélioré est optimisé. Ainsi, la valeur du paramètre à faire varier a atteint la valeur optimisée dudit paramètre.

Une oscillation acceptable est une oscillation inférieure à la valeur seuil.

Selon un mode de réalisation, la valeur d'un des paramètres est une consigne imposée par un exploitant de l'installation de transport de véhicules par un câble à mouvement continu.

Selon un mode de réalisation, le paramètre auquel une consigne est imposée est la vitesse moyenne câble. Ainsi les autres paramètres non consignés sont la tension moyenne du câble, la distance entre deux véhicules successifs, et la masse moyenne transportée par les véhicules.

Selon un mode de réalisation, le procédé de contrôle comprend une étape d'enregistrement de la valeur optimisée du paramètre à faire varier en fonction d'une valeur de consigne du paramètre à faire varier pour générer une bibliothèque de données.

Selon un mode de réalisation, l'invention fournit par ailleurs un dispositif d'apprentissage et de correction pour une installation de transport de véhicules par un câble à mouvement continu comprenant au moins un système de calcul configuré pour mettre en œuvre le procédé de contrôle selon l'invention.

Selon un mode de réalisation, le système de calcul comprend au moins un processeur. On comprend dès lors que le système de calcul peut être une unité centrale ou un serveur informatique distant. Le dispositif d'apprentissage et de correction peut accéder au serveur informatique distant par une connexion filaire ou sans fil au réseau de communication internet.

Selon un mode de réalisation, l'invention fournit en outre une installation de transport de véhicules par un câble à mouvement continu comprenant au moins un dispositif d'apprentissage et de correction selon l'invention.

Selon un mode de réalisation, l'installation de transport de véhicules par un câble à mouvement continu comprend un dispositif de commande configuré pour agir sur au moins un paramètre de l'installation de transport de véhicules par un câble à mouvement continu en fonction d'au moins d'une instruction envoyée par le dispositif d'apprentissage et de correction et/ou par un exploitant, les paramètres étant choisis parmi une tension moyenne du câble, une vitesse moyenne du câble, une distance entre deux véhicules successifs, et une masse moyenne transportée par les véhicules.

Selon un mode de réalisation, le dispositif de commande comprend une interface utilisateur couplée à un processeur et configurée pour permettre à un exploitant de choisir une consigne d'au moins un paramètre choisi parmi une tension moyenne du câble, une vitesse moyenne du câble, et une distance entre deux véhicules successifs.

Selon un mode de réalisation, l'invention fournit aussi un programme d'ordinateur comprenant des portions de codes de programme pour l'exécution du procédé de contrôle d'une installation de transport de véhicules par câble à mouvement continu selon l'invention, lorsque ledit programme est exécuté sur un ordinateur.

Selon un mode de réalisation, l'invention fournit enfin un produit programme d'ordinateur comportant un ensemble d'instructions qui, une fois chargées sur un ordinateur, permettent la mise en œuvre du procédé de contrôle d'une installation de transport de véhicules par un câble à mouvement continu selon l'invention.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

[fig 1] La figure 1 est une illustration schématique d'une installation de transport utilisant un ou plusieurs câbles, mobiles ou fixes, guidés et utilisant le procédé de contrôle de l'invention.

[fig 2] La figure 2 est un logigramme représentant les différentes étapes du procédé de contrôle selon l'invention.

[fig 3] La figure 3 est un graphe représentant les courbes d'évolution de la valeur de l'oscillation en fonction de la vitesse $v$ d'au moins un câble de l'installation de transport.

[fig 4] La figure 4 est un graphe représentant un profil de zones d'instabilité en fonction de la vitesse moyenne du câble de l'installation de transport.

[fig 5] La figure 5 est un graphe représentant la consigne de vitesse optimisée en fonction de la consigne de vitesse donnée par l'exploitant.

Il faut tout d'abord noter que si les figures exposent l'invention de manière détaillée pour sa mise en œuvre, elles peuvent bien entendu servir à mieux définir l'invention le cas échéant. Il est également à noter que, sur l'ensemble des figures, les éléments similaires et/ou remplissant la même fonction sont indiqués par la même numérotation.

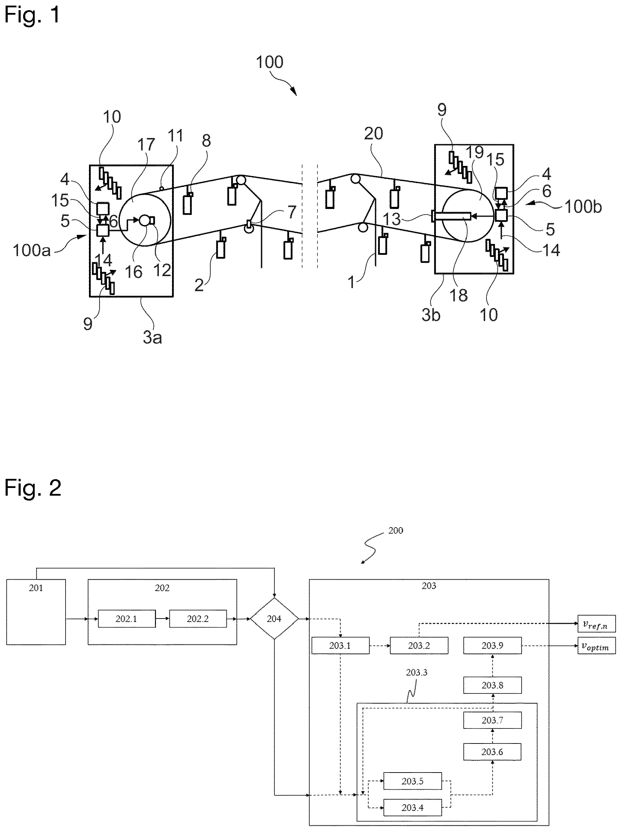

La figure 1 montre une installation de transport 100 utilisant le procédé de contrôle 200 selon l'invention. L'installation de transport 100 comprend un câble 20 mobile, en mouvement continu, et guidé et supporté par une pluralité de pylônes 1. Dans un mode de réalisation non représenté, l'installation de transport 100 comprend une pluralité de câbles 20.

Le câble 20 est un câble tracteur et porteur c'est-à-dire que le câble 20 assure à la fois une fonction de traction et de support des véhicules 2 accrochés au câble 20. Le câble 20 est continu en boucle fermée. Le câble 20 est un câble métallique comportant une pluralité de brins de fil métallique qui sont torsadés en une hélice formant une « corde » composite, selon un motif appelé « corde posée », ou comporte une pluralité de câbles métalliques présentant un motif de corde posée arrangés selon un modèle appelé « câble posé ». Le câble est composé principalement d'acier.

L'installation de transport 100 comporte par ailleurs des véhicules 2. Les véhicules 2 peuvent servir au transport de personnes et/ou de matériels. Les véhicules 2 sont configurés pour être accouplés au câble 20 et tractés par ce dernier. Plus particulièrement, l'installation de transport 100 peut être une télécabine, et dans ce cas les véhicules 2 sont fermés, ou un télésiège où les véhicules 2 sont ouverts. Dans un mode de réalisation non représenté, l'installation de transport 100 peut comprendre d'autres câbles tracteurs et/ou porteurs, notamment lorsque les véhicules 2 sont importants et lourds. Ces autres câbles peuvent être tracteurs ou porteurs L'installation de transport 100 comprend également deux stations d'extrémité 3a,3b pour l'embarquement et/ou le débarquement des personnes et/ou de matériel dans les véhicules 2. Une première station 3a est située à une première extrémité 100a de l'installation de transport 100 et une deuxième station 3b est située à une deuxième extrémité 100b de l'installation de transport. Les stations 3a, 3b sont aussi appelées gares. Ainsi, comme l'illustre la figure 1, le câble 20 permet de déplacer par traction les véhicules 2 de la première station 3a à la deuxième station 3b, et inversement.

Dans un mode de réalisation non représenté, l'installation de transport peut comprendre au moins une station intermédiaire située le long du câble. Elle est aussi destinée à l'embarquement et/ou au débarquement de passagers et/ou au transbordement de matériel selon le type d'utilisation de l'installation de transport 100.

Le câble 2 est entraîné par une poulie motrice 17, elle-même entraînée via un arbre relié à un moteur 16 électrique de la première station d'extrémité 3a, appelée également station motrice. La deuxième station d'extrémité 3b comporte, quant à elle, une poulie de renvoi 19 non motorisée et un système de mise en tension 18 du câble 20. La poulie de renvoi 19 n'est pas donc pas pilotée par le moteur 16 électrique ou un autre moteur. La poulie de renvoi 19 est libre en rotation. La poulie de renvoi est aussi appelée poulie folle.

Dans un autre mode de réalisation non représenté, le système de mise en tension 18 est situé dans la station motrice 3a. Le système de mise en tension 18 comprend un chariot mobile de mise en tension du câble 20, le chariot supportant la poulie motrice 17. La poulie motrice 17 joue alors un rôle tenseur et moteur.

Comme le montre la figure 1, l'installation de transport 100 comporte par ailleurs un dispositif d'apprentissage et de correction 4 qui agit en interaction directe avec un dispositif de commande 5 de l'installation de transport 100. Le dispositif d'apprentissage et de correction 4 comprend au moins un système de calcul, non représenté, configuré pour mettre en œuvre le procédé qui est décrit plus loin dans la description. Le système de calcul peut être une unité centrale comportant au moins un processeur monocœur ou multicœurs. Dans une autre mode de réalisation, le système de calcul est un serveur informatique distant auquel le dispositif d'apprentissage et de correction 4 a accès par une connexion filaire ou par une connexion sans fil via un réseau de communication, tel qu'internet. La connexion au réseau de communication peut être sécurisée.

Le dispositif de commande 5 est configuré pour agir sur au moins un paramètre de l'installation de transport 100 en fonction d'au moins une instruction 15 envoyée par le dispositif d'apprentissage et de correction 4. Le dispositif de commande 5 comprend par ailleurs une interface-utilisateur couplée à un processeur pour permettre à un exploitant 14 de donner des valeurs de consigne à au moins un des paramètres de l'installation de transport 100.

Dans l'exemple décrit et représenté sur la figure 1, les paramètres de l'installation de transport 100 sont une tension moyenne $T$ du câble 20, une vitesse moyenne $v$ du câble 20, une distance $d$ entre deux véhicules 2 successifs, et une masse moyenne $m$ transportée par les véhicules 2.

Le dispositif d'apprentissage et de correction 4 est configuré pour recevoir des informations 6 sur les paramètres de l'installation de transport 100, ces informations 6 étant au moins en partie collectées par un ensemble de capteurs localisés dans l'installation de transport 100. L'ensemble de capteurs comprend des capteurs de mesure 7 disposés sur les pylônes 1, des capteurs de mesure 8 disposés sur les véhicules 2, des capteurs de comptage 9 configurés pour compter les passagers et/ou la quantité de matériel entrant sur l'installation de transport 100 et agencés dans les stations 3a, 3b, des capteurs de comptage 10 configurés pour compter les passagers et/ou la quantité de matériel sortant sur l'installation de transport et agencés dans les stations, 3a,3b, un capteur de mesure 11 pour effectuer des mesures sur le câble 20, un capteur de mesure 12 pour effectuer des mesures sur le moteur 16 électrique, un capteur de mesure 13 pour effectuer des mesures sur le système de mise en tension 18 du câble 20.

Le dispositif d'apprentissage et de correction 4 peut recevoir également des informations 6 données par l'exploitant 14 via l'interface utilisateur du dispositif de commande 5. Ainsi l'exploitant 14 peut donner fixer une consigne pour au moins un des paramètres de l'installation de transport 100.

Les informations 6 collectées sont alors traitées par un produit programme d'ordinateur comportant des portions de codes de programme qui, une fois chargées sur le système de calcul, permettent la mise en œuvre du procédé de contrôle 200 de l'installation de transport 100. Après traitement, le dispositif d'apprentissage et de correction 4 envoie un ensemble d'instructions 15 pour agir sur au moins un des paramètres de l'installation de transport 100 même si une consigne a été donnée à au moins un des paramètres. En agissant, par exemple sur le moteur 16 électrique, la poulie motrice 17 et/ou l'équipement de mise en tension 18, le dispositif d'apprentissage et de correction 4 permettra de maitriser le comportement dynamique de l'installation de transport 100 comme les phénomènes vibratoires basse fréquence, encore appelés phénomènes de pompage, prenant notamment la forme d'au moins une oscillation du câble 20 et/ou d'au moins un des véhicules 2. Dans la suite de la description, l'oscillation est considérée comme un mouvement oscillatoire périodique établi.

Le moteur 16 est commandé et régulé en vitesse sur l'installation de transport 100. Le moteur 16 agit sur la poulie motrice 17. Les phénomènes vibratoires basse fréquence prenant notamment la forme d'au moins une oscillation du câble 20 et/ou d'au moins un des véhicules 2, les efforts engendrés sur le câble 20 ont un effet direct sur l'évolution instantanée du couple sur l'arbre lié à la poulie motrice 17 et donc, par conséquence, sur la valeur du couple instantané délivré par le moteur 16. La connaissance de la valeur des variations de couple $AC$ au niveau de la poulie motrice 17 renseigne donc de manière directe sur la valeur de l'amplitude des phénomènes vibratoires qui affectent l'installation de transport 100, par exemple la valeur de l'amplitude d'au moins une oscillation du câble 20 et/ou d'au moins un des véhicules 2 de l'installation de transport 100.

Pour améliorer la précision de la mesure de l'amplitude des phénomènes vibratoires, la mesure des variations de couple $AC$ peut être complétée par des mesures effectuées par des capteurs placés directement dans les portées de câble 20 et le long de la ligne de câble 20. Ainsi, des galets palpeurs peuvent être placés aux appuis de pylônes 1. Les galets palpeurs sont munis de capteurs d'effort qui délivrent un signal dont la variation est une image de l'amplitude des oscillations du câble 20 et/ou d'au moins un des véhicules 2. En complément ou alternativement, on dispose des accéléromètres dans au moins un des véhicules 2, préférentiellement dans plusieurs véhicules 2. De manière complémentaire ou alternativement, il est possible est de mesurer la vitesse de rotation instantanée à la poulie de renvoi 19, dont l'évolution dynamique s'effectue au gré des tensions du câble 20. Une mesure faite au niveau de la poulie de renvoi donne une caractérisation de la dynamique d'ensemble de l'installation de transport 100.

Ces mesures complémentaires pour améliorer la précision de la mesure de l'amplitude des phénomènes vibratoires permettent de prendre en compte une partie des phénomènes vibratoires qui ne reviennent pas jusqu'à la poulie motrice 17 et par conséquent qui n'affectent pas de façon significative l'évolution du couple instantané du moteur 16. En effet plusieurs raisons expliquent qu'une partie des phénomènes vibratoires présents sur la ligne puissent ne pas affecter de façon perceptible le couple à la poulie motrice 17. Par exemple, une portée de câble 20 soumise à une oscillation et trop éloignée de la poulie motrice 17, conduit les variations de tension de câble induites par l'oscillation à être « lissées » par les effets dissipatifs présents le long du câble 20 au niveau des appuis des pylônes 1 c'est-à-dire du faire des frottements entre le câble 20 et les garnitures des galets aux appuis des pylônes 1.

La synthèse des mesures réalisées en ces différents points caractérise les phénomènes vibratoires affectant l'installation de transport, et caractérise notamment une amplitude globale des oscillations du câble 20 et/ou d'au moins un des véhicules 2 de l'installation de transport 100.

Dans la suite de la description, on considère uniquement les variations de couple $AC$ comme reflétant la valeur de l'amplitude d'au moins une oscillation du câble 20 et/ou d'au moins un des véhicules 2 de l'installation de transport 100.

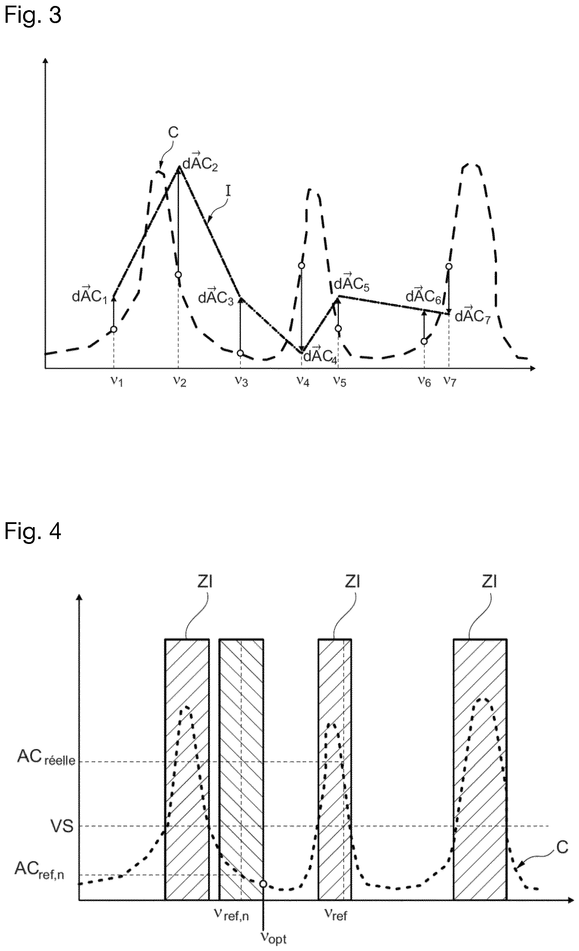

Le procédé de contrôle 200 de l'installation de transport de véhicules 100 permettant notamment de maitriser les phénomènes vibratoires de l'installation de transport 100, tels qu'au moins une oscillation du câble 20 et/ou d'au moins un des véhicules 2, va maintenant être décrit. Un logigramme du procédé de contrôle 200 est illustré sur la figure 3.

Dans la suite, le dispositif d'apprentissage et de correction 4 agit directement sur la consigne de vitesse du câble 20 qui est transmise à un variateur de contrôle d'entrainement du câble 20 par l'intermédiaire du dispositif de commande 5. Le variateur de contrôle d'entrainement est un module situé juste avant le moteur qui permet de contrôler les flux d'énergie qui lui sont envoyés. En outre, c'est un composant de commande du moteur 16.

Le procédé de contrôle 200 comprend une étape de détermination 201 d'au moins une oscillation du câble 20 et/ou d'au moins un des véhicules 2 en fonction d'au moins un paramètre choisi parmi une tension moyenne $T$ du câble 20, une vitesse moyenne $v$ du câble 20, une distance $d$ entre deux véhicules 2 successifs, et une masse moyenne $m$ transportée par les véhicules 2, une étape de génération d'une base de données 202 qui relient une valeur l'amplitude de l'oscillation à une combinaison de la tension moyenne $T$ du câble 20, la vitesse moyenne $v$ du câble 20, la distance $d$ entre deux véhicules 2 successifs, et la masse moyenne $m$ transportée par les véhicules 2 et une étape de réduction de l'oscillation 203 en faisant varier au moins l'un quelconque des paramètres.

La valeur des variations de couple $AC$ est considérée comme reflétant correctement la valeur de l'amplitude d'au moins une oscillation du câble 20 et/ou d'au moins un des véhicules 2.

L'étape de génération de la base de données peut faire partie d'un cycle d'apprentissage. Le cycle d'apprentissage est généralement initié avant la mise en service commercial de l'installation de transport et/ou pendant l'exploitation commerciale de l'installation de transport.

L'étape de génération de la base de données 202 comprend une première sous-étape d'échantillonnage d'oscillations 202.1. Au cours de cette étape, chaque oscillation du câble 20 et/ou d'au moins un des véhicules 2, par l'intermédiaire de la valeur des variations de couple $AC$, est associée à la mesure de la tension moyenne *T* du câble 20, la vitesse moyenne *v* du câble 20, la distance *d* entre deux véhicules 2 successifs, et la masse moyenne *m* transportée par les véhicules 2.

Le dispositif d'apprentissage et de correction 4 réalise des cycles de mesures, chacun d'une durée *DT* et en régime permanent c'est-à-dire en dehors des phases transitoires d'accélération ou de freinage du câble 20. A chaque cycle de durée *DT,* sont enregistrées la valeur de la masse moyenne *m* transportée par les véhicules 2 ou présente sur le câble 20, la valeur de tension moyenne *T* imposée au câble 20, la valeur de la vitesse moyenne *v* et la distance *d* entre deux véhicules 2 successifs sur le câble.

Autrement dit, le dispositif d'apprentissage et de correction 4 réalise des cycles de mesures des paramètres de l'installation de transport 100 sur une durée *DT* lorsque l'installation de transport 100 a atteint un régime de fonctionnement permanent. En condition de régime permanent, on considère que le dispositif de commande 5 envoie une instruction de vitesse constante au dispositif d'entrainement du câble 20, tandis que la vitesse réelle du câble mobile 20 évolue autour de cette instruction de vitesse constante.

La valeur des variations de couple *AC,* est évaluée au niveau de la poulie motrice 17 au cours des cycle de durée *DT* par le capteur de mesure 12 agencé sur le moteur 16 électrique. La lecture de la valeur de ces variations de couple *AC* s'effectue en suivant les évolutions de la valeur du courant absorbé par le moteur 16 électrique.

La valeur du courant instantané absorbé par le moteur 16 électrique à l'instant t, noté *IC*(*t*), donne alors une image directe du couple moteur instantané CM(t) selon la relation :

$$CM(t) = K * IC(t)$$

où K est une constante de proportionnalité dépendant du type de moteur 16 électrique et des caractéristiques électromagnétiques du moteur 16 électrique.

Pour accéder à la valeur des variations de couple *AC,* un premier calcul de la moyenne du signal du courant *IC* absorbé par le moteur sur une durée de cycle *DT,* notée *MC,* est mené par le dispositif d'apprentissage et de correction 4. Un calcul de l'écart Δ*MC* à la moyenne MC de chaque valeur du courant *IC* absorbé par le moteur 16 électrique mesurée avec une période d'échantillonnage *dT,* est ensuite effectué :

$$\Delta MC(dT) = |IC(dT) - MC|.$$

Au cours d'un cycle, un nombre $\frac{DT}{dT}$ de valeurs *IC*(*dT*) échantillonnées est enregistré. En faisant la moyenne des $\frac{DT}{dT}$ écarts Δ*MC* ainsi obtenus sur un cycle, c'est-à-dire la moyenne des variations autour de la moyenne, une valeur moyenne approchée de la valeur des variations de couple *AC* est obtenue :

$$AC = \frac{dT}{DT} \sum_{dT} \Delta MC(dT)$$

Dans un autre mode de réalisation non représenté, la valeur des variations de couple *AC* peut être mesurée en effectuant une mesure d'effort directement, par exemple, avec un ensemble moto-réducteur monté sur un berceau libre en rotation selon l'axe de l'arbre relié à la poulie motrice 17 et équipé de capteurs d'effort.

En lieu et place de la lecture de la valeur du courant absorbé du moteur 16, d'autres moyens sont envisageables pour quantifier au moins une oscillation du câble 20 et/ou d'au moins un des véhicules 2. Par exemple, à partir d'un signal issu d'un accéléromètre disposé dans les véhicules 2, et/ou grâce aux capteurs de mesure 7 sur les pylônes 1 en contact direct avec le câble 20 et réagissant à ses mouvements, et/ou plus largement en employant n'importe quel capteur qui donne un renseignement sur les mouvements du câble 20 et des véhicules 2.

La valeur de la tension moyenne *T* du câble 20, imposée par le système de mise en tension 18, sur la durée *DT,* est lue à partir du signal issu du capteur de mesure 13. Dans le cas d'une tension par contrepoids, la masse du système de tension est renseignée et réputée fixée. Dans le cas d'un ancrage fixe du câble, la tension est lue à partir d'un capteur d'effort situé dans l'ancrage ou tout autre montage de capteur réalisant une fonction similaire.

La valeur de la vitesse moyenne *v* du câble 20 mobile sur la durée *DT* est évaluée à partir du capteur de mesure 11 au contact du câble dans une des deux stations 3a, 3b. Le capteur de mesure 11 est par exemple une poulie tachymétrique. Dans un autre mode de réalisation, l'évaluation de la vitesse moyenne *v* du câble 20 peut être faite à partir du capteur de mesure 7 placé sur le pylône 1.

Pour calculer, la distance *d* entre deux véhicules 2 successifs, il faut quantifier le nombre $n_{vec}$ de véhicules 2 circulant le long du câble 20 ainsi que la longueur totale *L* de la boucle de câble 20.

Le nombre $n_{vec}$ de véhicules 2 circulant le long du câble 20 est, soit préalablement connu puisque rentré manuellement par l'exploitant 14 dans le dispositif de commande 5, soit évalué sur la durée du cycle de durée *DT* par un comptage individuel de chaque véhicule 2 identifié lors du passage en station 3a, 3b. Dans ce second cas, le comptage est réalisé par un capteur pouvant être de type inductif ou réalisant une fonction similaire.

La longueur totale L de la boucle de câble 20 est mesurée par un dispositif de mesure angulaire, ou par un dispositif remplissant une fonction similaire en contact direct ou indirect avec le câble 20.

Ainsi il est possible de calculer la distance *d* qui sépare deux véhicules 2, consécutifs et considérés comme uniformément répartis le long du câble 20 selon la formule suivante :

$$d = \frac{L}{n_{vec}}$$

La masse moyenne *m* transportée par les véhicules 2 en mouvement le long du câble 20 sur la durée *DT* du cycle est estimée par les capteurs de mesure 9, 10 positionnés dans les stations 3a, 3b. Dans le cas d'une utilisation pour le transport de passagers, la masse moyenne m est calculée, à partir du nombre de passages réalisés en entrées et éventuellement en sorties de l'installation de transport 100 pour chaque côté exploité. Selon un mode de réalisation, l'installation de transport 100 est intégrée dans un réseau en zone urbaine qui requiert la présence de portillons de contrôle à chaque point de passage, le comptage est alors réalisé à la fois en entrée et en sortie. Selon un autre mode de réalisation, l'installation de transport 100 est implantée sur les domaines skiables, un seul comptage des passagers peut alors être réalisé. Dans ce cas, seuls les passages en entrée sont utilisés pour l'estimation de la masse moyenne *m.*

Il est possible d'exploiter l'installation de transport 100 uniquement dans un sens ou bien dans les deux sens de la marche du câble 20, ce qui nécessite une estimation de la masse moyenne *m* d'un seul côté ou bien des deux côtés de la boucle du câble 20.

Pour affiner la connaissance de la masse moyenne *m* portée par le câble 20, les passages aux entrées donnent une estimation de la masse de la première moitié d'un côté de ligne ou sur sa totalité en l'absence de comptage en sortie, tandis que le nombre de passage à la sortie renseigne sur la masse de la seconde moitié. Un estimateur de la masse moyenne *m,* interne au dispositif d'apprentissage et de correction 4, utilise ainsi ces informations pour renvoyer une valeur de masse moyenne m sur la durée *DT.*

Selon un autre mode de réalisation, le suivi de l'évolution du déplacement du système de mise en tension 18 du câble 20 ou du couple moteur 16 est un moyen d'accéder à une estimation de la valeur de la masse moyenne *m* transportée par les véhicules 2. Selon un autre mode de réalisation, il est aussi possible d'utiliser des capteurs directement à l'intérieur des véhicules 2.

Ces mesures définissent un tableau de paramètres TP regroupant les quatre valeurs mesurées et/ou calculées des quatre paramètres de l'installation de transport 100 :

$$TP = [m\ T\ v\ d].$$

Pour chaque tableau de paramètres TP relevé durant les cycles de durée *DT* est alors associée la valeur des variations de couple *AC* correspondante. Une base de données est ainsi constituée par tous les couples *(TP, AC)* rencontrés lors du fonctionnement de l'installation de transport 100.

La première sous-étape d'échantillonnage 202.1 peut faire partie du cycle d'apprentissage généralement initié avant la mise en service commercial de l'installation de transport 100 pour générer rapidement la base de données. La base de données peut continuer à être alimentée au fur et à mesure des cycles d'apprentissages successifs conduits pendant l'exploitation de l'installation de transport 100.

Afin d'enrichir le plus rapidement et efficacement possible la base de données de couples *(TP, AC)* pendant le cycle d'apprentissage, il peut être nécessaire de définir un protocole de cycles d'apprentissage enregistrant la mesure des oscillations de couple *AC* pour des vitesses moyenne *v* du câble 20, des valeurs de tensions moyenne *T* du câble 20, des nombres $n_{vec}$ de véhicules 2 attachés au câble 20, de masse moyenne *m* transportée par le câble 20, ces valeurs étant précisément définies par le protocole.

Pour faire varier la masse *m* transportée par le câble 20, on peut utiliser des lests de masse maitrisée positionnés sur les véhicules 2. Il est aussi possible que les véhicules 2 soient vides pour la mise en œuvre du protocole de cycles d'apprentissage.

Ce protocole permet donc de balayer une large gamme de couples *(TP, AC)* afin d'obtenir une cartographie grossière du comportement dynamique de l'installation de transport 100.

Si l'exploitant 14 désire imposer une consigne à la valeur d'un des paramètres, il peut être utile de compléter la cartographie grossière en mesurant la valeur des variations de couple *AC* pour plusieurs valeurs du paramètre auquel l'exploitant 14 désire imposer une consigne, la valeur des autres paramètres étant fixe.

Ainsi si l'exploitant désire imposer une consigne à la valeur de la vitesse moyenne *v* du câble 20, il peut être utile de compléter la cartographie grossière en mesurant la valeur des variations de couple *AC* pour plusieurs vitesses moyennes *v* différentes, les paramètres de masse moyenne *m,* de tension moyenne *T* et de distances *d* étant fixés. Autrement dit, la vitesse moyenne *v* varie alors que les autres paramètres sont constants et connus.

Il en résulte des courbes C représentant la variation de couple *AC* en fonction de la vitesse moyenne *v*, chaque courbe C étant donc associée à un triplet des paramètres [*m T d*] fixés que sont la masse moyenne *m,* la tension moyenne *T* et la distance d. En d'autres termes, la variation de couple *AC* est une fonction *g* de la vitesse moyenne *v* pour un triplet de paramètres [*m T d*] fixé :

$$AC = g_{[m,T,d]}(v)$$

La première sous-étape d'échantillonnage (202.1) peut aussi comprendre un enrichissement de la base de données durant l'exploitation de l'installation de transport 100 par l'enregistrement d'un couple (*TP, AC*) instantané de l'installation de transport 100 mené par le dispositif d'apprentissage et de correction 4 sur une durée *DT.* Le couple (*TP, AC*) instantané est a priori différent des autres couples déjà enregistrés dans la base de données. En effet, la masse transportée par l'installation de transport 100 évolue de façon continue et varie selon l'affluence. De même, la consigne de la vitesse du câble 20 varie selon les conditions d'exploitation comme, par exemple, les conditions de chargement des véhicules 2 varie selon l'affluence, le vent, ou la présence de skieurs débutants nécessitant de diminuer la vitesse pour faciliter l'embarquement. Il existe donc théoriquement une infinité de tableaux de paramètres *TP* possibles.

En exploitation, si le tableau de paramètres *TP* instantané rencontré par le dispositif d'apprentissage et de correction 4 est déjà présent dans la base de données, alors la base de donnée est actualisée avec la valeur de la variation de couple *AC* instantanée correspondant au tableau de paramètres *TP* instantané afin de tenir compte de l'évolution des phénomènes vibratoires de l'installation de transport 100 selon les conditions de fonctionnement comme, par exemple, l'usure, l'allongement du câble ou encore la température.

L'installation de transport 100 est considérée en fonctionnement et avoir atteint le régime permanent pour une consigne de vitesse $v_{ref}$ donnée par l'exploitant 14. L'ensemble des capteurs permettent au dispositif d'apprentissage et de correction 4 de connaitre, en temps réel, la valeur des paramètres que sont la masse moyenne *m* transportée par les véhicules 2, la tension moyenne *T* du câble 20, la distance *d* entre deux véhicules successifs et uniformément répartis sur le câble 20, soit le triplet réel $[m\ T\ d]_{réel}$ et la valeur des variations de couple $AC_{réel}$. Ces mesures se font donc en temps réel.

L'étape de génération de la base de données 202 comprend une deuxième sous-étape d'extrapolation 202.2 des données obtenues lors de la première sous-étape pour compléter la base de données 202.1, notamment lorsque le triplet $[m\ T\ d]_{réel}$ ne se trouve pas dans la base de données et qu'il n'y a donc pas de courbe C. L'interpolation permet ainsi de donner ainsi accès à la connaissance de la valeur des variations de couple *AC* du câble 20 selon la vitesse moyenne *v* du câble pour n'importe triplet donné et rencontré au cours du fonctionnement de l'installation de transport 100 qui n'a pas fait partie des cycles d'apprentissage de la première sous-étape 202.1. De cette manière, elle permet au dispositif d'apprentissage et de correction 4 de corriger la vitesse moyenne *v* pour n'importe quel triplet de paramètres de l'installation de transport 100 pour éviter un comportement dynamique inapproprié de l'installation de transport 100 c'est-à-dire au moins une oscillation inappropriée du câble 20 et/ou d'au moins un des véhicules 2.

Afin de réaliser l'interpolation, on suppose que la variation de couple *AC* en fonction de la vitesse moyenne du câble *v* par rapport à chaque paramètre d'un triplet considéré est une fonction linéaire au voisinage du triplet considéré. On peut ainsi calculer le gradient des variations de couple *AC* par rapport à chaque paramètre du triplet considéré c'est-à-dire par rapport à la masse moyenne *m,* la tension moyenne *T* et la distance *d* :

$$\vec{\nabla}AC = \begin{pmatrix} \dfrac{\partial AC}{\partial m}(v) \\ \dfrac{\partial AC}{\partial T}(v) \\ \dfrac{\partial AC}{\partial d}(v) \end{pmatrix}_{v\ fixée}$$

Pour effectuer ce calcul de gradient, on classe les courbes C de variation de couple *AC* par familles de vitesse moyennes *v*. Chaque courbe C étant associée à un triplet de paramètres [*m T d),* on les classe ensuite par groupes tel qu'un seul des trois paramètres des triplets [*m T d]* évolue tandis que les deux autres conservent des valeurs fixes.

A partir de ces familles et de ces groupes ainsi créés, on accède à l'évaluation de la dérivée partielle $\dfrac{\partial AC}{\partial .}(v)$ de la variation de couple *AC* par rapport à chaque paramètre *m, T* et *d* des triplets, et pour chacune des vitesses moyennes *v* présentes dans la base de données.

Une fois les gradients connus, l'interpolation est effectuée en recherchant dans la base de données la courbe C de variations de couple *AC* en fonction de la vitesse moyenne *v* dont le triplet [*m T d]* correspond notablement au triplet en temps réel $[m\ T\ d]_{réel}$ de l'installation de transport 100. Il faut entendre ici, ainsi que dans tout ce qui suit, par « notablement », la distance entre le triplet [*m T d]* et le triplet réel $[m\ T\ d]_{réel}$ est minimale.

On applique alors le calcul précédent du gradient aux variations entre chacun des paramètres des deux triplets ciblés, ce qui permet d'obtenir la courbe I des variations de couple *AC* interpolée en fonction de la vitesse moyenne *v* pour le triplet $[m\ T\ d]_{réel}$.

En référence à la figure 3, une courbe C, obtenue pendant l'apprentissage et représentant la variation de couple *AC* en fonction de la vitesse moyenne *v* pour le triplet de paramètres [*m T d]*. A partir de cette courbe C connue par l'apprentissage, une interpolation est réalisée afin d'accéder à la connaissance de la courbe I selon la méthode d'interpolation qui vient d'être décrite. La courbe I représente donc la variation de couple, et donc l'amplitude de l'oscillation du câble 20 et/ou d'au moins un des véhicules 2, en fonction de la vitesse moyenne v pour un triplet actuel [*m T d*]$_{réel}$, qui n'est pas issue de l'apprentissage.

Le procédé de contrôle 200 comprend une étape de comparaison 204 entre la valeur d'oscillation, à savoir la valeur de la variation de coupe $AC_{réelle}$ et une valeur seuil VS au-dessus de laquelle une oscillation est interdite et en dessous de laquelle une oscillation est autorisée.

Le tracé des courbes C et I représentant la variation de couple *AC* en fonction de la vitesse moyenne *v* pour un triplet donné fait apparaître des valeurs seuils de vitesse moyenne au-dessus desquelles la variation de couple *AC* correspondante est inacceptable car elle correspond à une amplitude de l'oscillation inadéquate. En d'autres termes les valeurs seuil définissent une frontière en vitesse moyenne *v* à ne pas franchir pour chaque triplet de la base de données [*m T d*] et donc le triplet réel [*m T d*]$_{réel}$.

La figure 4 montre un graphique sur lequel est représenté la courbe C de la figure 3 c'est-à-dire la variation de couple *AC* en fonction de la vitesse moyenne *v* pour un triplet [*m T d*]. Les valeurs seuil VS à ne pas dépasser définissent des zones d'instabilité ZI dans lesquelles se trouvent les valeurs seuil à ne pas franchir.

Le dispositif d'apprentissage et de correction 4 choisit dans la base de données la courbe C dont le triplet [*m T d*] correspond au triplet [*m T d*]$_{réel}$ ou procède à l'interpolation pour obtenir la courbe I du triplet [*m T d*]$_{réel}$. Le dispositif d'apprentissage et de correction 4 détermine alors les valeurs seuil. Avant de procédé à l'étape de réduction de l'oscillation 203, le dispositif d'apprentissage et de correction 4 peut comparer la valeur de la variation de couple $AC_{réelle}$ à la valeur seuil VS.

Si la valeur de la variation de couple $AC_{réelle}$ est supérieure ou égale à la valeur seuil VS pour la consigne de vitesse $v_{ref}$ et donc se trouve dans la zone d'instabilité ZI pour la consigne de vitesse $v_{ref}$, alors le dispositif d'apprentissage et de correction 4 procède opère une sous-étape d'amélioration 203.1 de l'étape de réduction de l'oscillation 203 c'est-à-dire à une réduction de la valeur de la variation de couple *AC* en faisant varier au moins l'un des paramètres en choisissant une valeur dudit paramètre dans la base de données. Comme on le voit dans l'exemple illustré à la figure 4, la valeur de la variation de couple $AC_{réelle}$ pour le triplet [*m T d*]$_{réel}$ qui correspond au triplet de [*m T d*] déjà enregistré dans la banque de données, tombe dans une zone interdite ZI.

Pour cette étape de réduction de l'oscillation 203, le dispositif d'apprentissage et de correction 4 va procéder à un changement de valeur d'au moins un des paramètres, par exemple sur la vitesse moyenne *v* et donc sur la consigne de vitesse $v_{ref}$ choisie par l'exploitant 14 et/ou sur la tension moyenne *T* du câble 20.

La sous-étape d'amélioration 203.1 de l'étape de réduction 203 de l'oscillation, et donc de la valeur de la variation de couple *AC,* porte, dans l'exemple sur une la vitesse moyenne *v* afin de se placer en dessous de la valeur seuil VS en utilisant les courbes C ou I, tout en garantissant une vitesse moyenne *v* du câble 20 la plus proche possible de la consigne de vitesse $v_{ref}$. En d'autres termes le dispositif d'apprentissage et de correction 4 va définir une nouvelle consigne de vitesse $v_{ref,n}$ et donc une plage de variation de la vitesse moyenne *v* du câble 20 autour de $v_{ref,n}$ laquelle est proche de la consigne de vitesse $v_{ref}$ fixée par l'exploitant 14, et tout en restant en dehors de la zone d'instabilité ZI en utilisant la base de données. On voit sur la figure 4 que la nouvelle consigne de vitesse $v_{ref,n}$, à laquelle correspond la variation de couple $AC_{ref,n}$, est en dehors des zones d'instabilité.

L'étape de réduction 203 de la valeur de la variation de couple *AC* peut comprendre une première sous-étape de vérification 203.2 de la possibilité d'atteindre la nouvelle consigne de vitesse $v_{ref,n}$ proche de la consigne de vitesse $v_{ref}$ pour rester en dehors de la zone d'instabilité ZI et atteindre soit une oscillation acceptable soit l'absence d'oscillation. Dans le cas où la nouvelle consigne de vitesse $v_{ref,n}$ est trop contraignante, par exemple, parce qu'un écart est trop important vis-à-vis de la consigne de vitesse $V_{ref}$, mais est néanmoins nécessaire pour s'écarter d'une instabilité et réaliser l'amélioration dans de bonnes conditions : le dispositif d'apprentissage et de correction 4 fait l'ajustement en faisant la correction sur un paramètre alternatif ou complémentaire de la vitesse, le paramètre alternatif ou complémentaire étant facilement contrôlable, comme par l'intermédiaire de la tension du câble *T* par exemple. Ce changement de paramètre corrigé par le dispositif d'apprentissage et de correction 4 a lieu jusqu'à ce qu'on puisse reprendre la correction sur la vitesse moyenne, par exemple suite à une modification de la masse *m* sur la ligne. Le dispositif d'apprentissage et de correction 4 fonctionne alors de nouveau comme détaillé précédemment, et ré-applique une tension nominale au câble 20 identique à celle avant modification.

L'étape de réduction de l'oscillation 203, c'est-à-dire de la valeur de la variation de couple *AC,* peut comprendre une sous-étape d'optimisation 203.3 de la vitesse. Le but est de modifier très légèrement la nouvelle consigne de vitesse $v_{ref,n}$ issue de la base de données afin d'obtenir une consigne de vitesse optimisée $v_{optim}$ en termes de minima des variations de couple *AC,* sachant qu'on s'est déjà échappé des zones d'instabilité, c'est-à-dire qu'on est situé à un point minimum des oscillations selon les données obtenues lors de la sous-étape d'amélioration 203.1. En effet, on n'est pas au minimum réel compte tenu de l'échantillonnage sur les vitesses moyenne dans la base de données et du fait que la nouvelle consigne de vitesse $v_{ref,n}$ doit être la plus proche de la consigne de vitesse $v_{ref}$ de l'exploitant 14 qui reste inchangée. En effet, l'exploitant 14 impose la consigne de vitesse $v_{ref}$ et la correction agit autour de celle-ci.

Lors de cette sous-étape d'optimisation 203.3 de la consigne de vitesse $v_{ref,n}$, une phase de variation 203.4 de la nouvelle consigne de vitesse $v_{ref,n}$ est effectuée. La phase de variation 203.4 consiste à changer très légèrement la nouvelle consigne de vitesse $v_{ref,n}$. La consigne de vitesse est changée de $v_{ref,n}$ à $v_{ref,n,var}$. Une phase de lecture 203.5 des variations de couple $AC$ par le dispositif d'apprentissage et de correction 4 grâce à l'ensemble des capteurs est effectuée avant et après la phase de variation 203.4. Ainsi le dispositif d'apprentissage et de correction 4 dispose de la valeur de la variation de couple $AC_{ref,n}$ correspondant à la nouvelle consigne de vitesse $v_{ref,n}$ et la valeur de la variation de couple $AC_{ref,n,var}$ pour la variation de la nouvelle consigne de vitesse $v_{ref,n,var}$.

La phase de variation 203.4 et la phase de lecture 203.5 sont suivies d'une phase de comparaison 203.6 entre les valeurs des variations de couples obtenues à la phase de lecture 203.4 c'est-à-dire entre $AC_{ref,n}$ et $AC_{ref,n,var}$.

La différence entre les deux valeurs $AC_{ref,n}$ et $AC_{ref,n,var}$ obtenue lors de la phase de comparaison 203.6 est alors envoyée à un correcteur interne au dispositif d'apprentissage et de correction 4 pour confirmer que l'oscillation a effectivement été diminuée, c'est la phase de confirmation 203.7. S'il est confirmé que l'oscillation a été diminuée alors les étapes 203.4 à 203.7 sont réitérées jusqu'à obtenir une différence qui confirme qu'il n'y a pas eu de diminution de l'oscillation.

S'il est confirmé que l'oscillation n'a pas diminué, alors une vitesse optimisée $V_{optim}$ pour un minimum local d'oscillations a été trouvée.

Par ailleurs, la contrainte de rester proche de la consigne de vitesse $v_{ref}$ impose d'arrêter la sous-étape d'optimisation 203.3 si on s'écarte trop de la consigne $v_{ref}$ au cours des phases 203.4 à 203.7.

Lorsque le dispositif d'apprentissage et de correction 4 a obtenu la consigne de vitesse $V_{optim}$ qui est donc une optimisation de la consigne de vitesse $v_{ref,n}$, le dispositif d'apprentissage et de correction 4 procède à une sous-étape d'ajustement 203.8 en envoyant la valeur de $V_{optim}$ au dispositif de commande 5 sous forme d'une instruction 15 pour faire varier l'entraînement du moteur et ainsi ajuster la vitesse moyenne du câble à $V_{optim}$ à partir de la valeur du paramètre amélioré. Sur la figure 4, on voit que $v_{optim}$ est, en termes de minima des variations de couple $AC$, est bien une optimisation de $v_{ref,n}$.

L'étape de réduction de la valeur de la variation de couple $AC$ 203 peut éventuellement comprendre une deuxième sous-étape de vérification 203.9 de la possibilité d'atteindre $v_{optim}$, l'optimisation de la consigne de vitesse $v_{ref,n}$, proche de la consigne de vitesse $v_{ref}$. Ainsi on s'assure toujours d'avoir soit une oscillation acceptable ou une absence d'oscillation. Dans le cas où $V_{optim}$ est trop contraignante, par exemple, parce qu'un écart est trop important vis-à-vis de la consigne de vitesse $v_{ref}$, le dispositif d'apprentissage et de correction 4 agit alors en ajustant un paramètre alternatif ou complémentaire de la vitesse comme par l'intermédiaire de la tension du câble $T$ par exemple. Ce changement de paramètre corrigé par le dispositif d'apprentissage et de correction 4 a lieu jusqu'à ce qu'on puisse reprendre la correction sur la vitesse moyenne $v$ et donc sur la consigne de vitesse, par exemple suite à une modification de la masse $m$ sur la ligne. Le dispositif d'apprentissage et de correction 4 fonctionne alors de nouveau comme détaillé précédemment, et ré-applique une tension nominale au câble 20 identique à celle avant modification.

Si la valeur de la variation de couple $AC_{réelle}$ est inférieure à la valeur seuil VS alors l'oscillation est une oscillation acceptable. Toutefois, même si l'oscillation est acceptable, il peut être utile de chercher à diminuer l'oscillation par exemple pour le confort des passagers. De plus, on n'est pas nécessairement au minimum réel des oscillations.

Pour diminuer l'amplitude de l'oscillation acceptable, le dispositif d'apprentissage et de correction 4 procède directement la sous-étape d'optimisation 203.3. Dans ce cas, le principe de la sous-étape d'optimisation 203.3 décrite ci-dessus est appliqué à la consigne de la vitesse $v_{ref}$ donnée par l'exploitant 14.

Le but est de modifier très légèrement la consigne de vitesse $v_{ref}$ afin d'obtenir une consigne de vitesse optimisée $V_{optim}$ en termes de minima des variations de couple $AC$, sachant qu'on s'est déjà en dehors zones d'instabilité.

Lors de cette sous-étape d'optimisation 203.3 de la consigne de vitesse $v_{ref}$, une phase de variation 203.4 de la consigne de vitesse $v_{ref}$ est effectuée. La phase de variation 203.4 consiste à changer très légèrement la consigne de vitesse $v_{ref}$. La consigne de vitesse est changée de $v_{ref}$ à $v_{ref,var}$. Une phase de lecture 203.5 des variations de couple $AC$ par le dispositif d'apprentissage et de correction 4 grâce à l'ensemble des capteurs est effectuée avant et après la phase de variation 203.4. Ainsi le dispositif d'apprentissage et de correction 4 dispose de la valeur de la variation de couple $AC_{ref}$ correspondant à la consigne de vitesse $v_{ref}$ et la valeur de la variation de couple $AC_{ref,var}$ pour la variation de la consigne de vitesse $v_{ref,var}$.

La phase de variation 203.4 et la phase de lecture 203.5 sont suivies d'une phase de comparaison 203.6 entre les valeurs des variations de couples obtenues à la phase de lecture 203.4 c'est-à-dire entre $AC_{ref}$ et $AC_{ref,var}$.

La différence entre les deux valeurs $AC_{ref}$ et $AC_{ref,var}$ obtenue lors de la phase de comparaison 203.6 est alors envoyée au correcteur interne au dispositif d'apprentissage et de correction 4 pour confirmer que l'oscillation a effectivement été diminuée, c'est la phase de confirmation 203.7. S'il est confirmé que l'oscillation a été diminuée alors les étapes 203.4 à 203.7 sont réitérées jusqu'à obtenir une différence qui confirme qu'il n'y a plus de diminution de l'oscillation.

S'il est confirmé que l'oscillation n'a pas ou plus diminué, alors une vitesse optimisée $V_{optim}$ pour un minimum local d'oscillations a été trouvée.

Par ailleurs, la contrainte de rester proche de la consigne de vitesse $v_{ref}$ impose d'arrêter la sous-étape d'optimisation 203.3 si on s'écarte trop de la consigne $v_{ref}$ au cours des phases 203.4 à 203.7.

Ensuite le dispositif d'apprentissage et de correction 4 poursuit avec la sous-étape d'ajustement 203.8 et éventuellement la deuxième sous-étape de vérification 203.9 décrites plus haut.

Les mesures des valeurs moyennes des paramètres *m, T, v, d* et des variations de couple *AC* lors de l'étape de génération de la base de données 202 sont réalisées sur une durée *DT*. La phase de correction 203 s'effectue sur une durée d'action *DA*. Les durées *DT* et *DA* sont choisies selon la fréquence à laquelle on souhaite que le dispositif d'apprentissage et de correction 4 rentre en action.

Le procédé décrit peut comprendre par ailleurs une étape d'enregistrement des vitesses optimisées $v_{optim}$. En reprenant l'exemple précédent, une fois $v_{optim}$ atteinte, le dispositif d'apprentissage et de correction 4 enregistre les valeurs des paramètres de l'installation de transport 100 et y associe la vitesse optimale $V_{optim}$ calculée pour la consigne de vitesse $v_{ref}$ donnée par l'exploitant 14. L'enregistrement s'effectue dans une bibliothèque de données. De cette manière un ensemble de vitesses $v_{optim}$ issues de chaque amélioration de l'optimisation, et associées à un triplet des paramètres [*m, T, d*] et une vitesse de consigne donnée $v_{ref}$, est établi. En d'autres termes, la vitesse $V_{optim}$ est une fonction *f* de la vitesse moyenne $v_{ref}$ pour un triplet [*m T d*] :

$$v_{optim} = f_{[m,T,d]}(v_{ref})$$

Il en résulte des courbes D représentant les fonctions f pour un triplet de paramètres [*m T d*]. Dans ces conditions, il suffit au dispositif d'apprentissage et de correction 4 de lire la vitesse de consigne $v_{ref}$ donnée par l'exploitant 14 ainsi que le triplet [*m T d*] instantanée grâce à l'ensemble des capteurs disposés sur l'installation de transport 100, puis d'aller rechercher dans la bibliothèque de données l'amélioration de l'optimisation de la vitesse $V_{optim}$ correspondante.

Une méthode d'interpolation, telle que celle menée lors de la sous-étape d'interpolation, peut être réalisée si la courbe D ne se trouve pas dans la base de données.

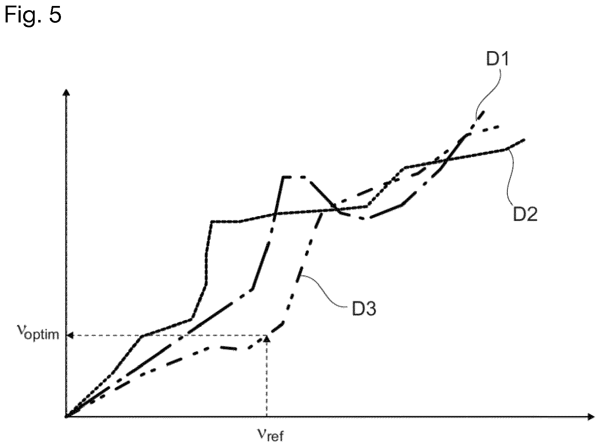

En référence à la figure 5, un graphique représente une courbe D1 représentant la fonction $f_{[m_1,T_1,d_1]}$ et la courbe D2 représentant la fonction $f_{[m_2,T_2,d_2]}$. Si la vitesse optimale n'est pas connue, le dispositif d'apprentissage et de correction 4 peut réaliser une interpolation similaire à celle décrite pour la deuxième sous-étape d'extrapolation des données. Une interpolation est réalisée à partir de la fonction dont le triplet est le plus proche du triplet réel donc soit à partir de la fonction $f_{[m_1,T_1,d_1]}$ soit de la fonction $f_{[m_2,T_2,d_2]}$ déjà connues. Ainsi on peut accéder à $f_{[m_3,T_3,d_3],interpol}$ donnant les $V_{optim}$ pour un triplet quelconque [*m_3, T_3, d_3*] et représentée par la courbe D3. Ensuite, le dispositif de commande peut directement utiliser $v_{optim}$ correpondant à la consigne de vitesse $v_{ref}$ pour le [*m_3, T_3, d_3*].

Cette bibliothèque de données peut être par la suite utilisée de manière autonome par le dispositif de commande 5, sans qu'il soit nécessaire de réaliser une succession de phase d'apprentissage et de correction, une fois qu'un nombre suffisant de cycles d'apprentissage et d'optimisation a été réalisé.

La description du procédé de contrôle est développée pour un système de transport par câbles à mouvement continu muni de plusieurs véhicules uniformément répartis le long d'une unique boucle de câble mobile et à laquelle ils sont accrochés. Le principe détaillé dans cette description reste néanmoins valable pour les dispositifs à va-et-vient et à mouvement continu, muni d'un unique ou de plusieurs véhicules sur chaque voie, d'un ou plusieurs câbles mobiles et/ou fixes.

Le procédé 200 décrit est plus largement applicable à tout processus d'optimisation d'une grandeur caractéristique d'une installation de transport par câbles 100 en fonction d'une grandeur de consigne. L'optimisation est encore effectuée par le dispositif 4 lui-même intégré à l'installation de transport 100 et utilisant des points de mesures répartis sur l'installation de transport 100. Les mesures sont réalisées en temps réel ou bien collectées et sauvegardées pour une utilisation ultérieure. Une grandeur caractéristique est une grandeur qui se rapporte au fonctionnement de l'installation de transport 100, à son mouvement et à ses caractéristiques. Par exemple, une grandeur caractéristique peut être une amplitude des oscillations d'au moins un câble et/ou d'au moins un des véhicules portés par le câble tel que décrit précédemment, une consommation électrique des moteurs d'entraînement, un paramètre quelconque de réglage des automatismes qui génèrent les consignes, une grandeur mécanique quelconque qui définit le mouvement de l'appareil ou encore une grandeur quelconque qui caractérise l'état du système à un instant donné.

Les outils mathématiques du procédé selon l'invention ne sont qu'une illustration. Le procédé selon l'invention pourrait utiliser une approche probabiliste stochastique ou des algorithmes d'apprentissage automatique (appelé en anglais « machine learning ») en lieu et place des outils mathématiques présentés pour aboutir à l'optimisation de la grandeur caractéristique en fonction de la grandeur de consigne.

Bien sûr, l'invention n'est pas limitée aux exemples qui viennent d'être décrits et de nombreux aménagements peuvent être apportés à ces exemples sans sortir du cadre de l'invention.

**Revendications**

1. Procédé de contrôle (200) d'une installation de transport (100) de véhicules (2) par au moins un câble (20) à mouvement continu, le procédé comprenant :

- une étape de détermination d'au moins une oscillation (201) du câble (20) et/ou d'au moins un des véhicules (2) en fonction d'au moins un paramètre choisi parmi les paramètres suivants : une tension moyenne ($T$) du câble (20), une vitesse moyenne ($v$) du câble (20), une distance ($d$) entre deux véhicules successifs, et une masse moyenne ($m$) transportée par les véhicules (2),

- une étape de génération d'une base de données (202) qui relie une valeur de l'oscillation (AC) à une combinaison de la tension moyenne ($T$) du câble (20), la vitesse moyenne ($v$) du câble (20), la distance ($d$) entre deux véhicules (2) successifs, et la masse moyenne ($m$) transportée par les véhicules (20), et

- une étape de réduction de l'oscillation (203) en faisant varier un ou plusieurs paramètres à faire varier parmi les paramètres, selon la base de données (202).

2. Procédé de contrôle (200) selon la revendication précédente, au cours duquel l'étape de génération de la base de données (202) comprend une première sous-étape d'échantillonnage (202.1) d'oscillations, chaque oscillation étant associée à une mesure de la tension moyenne ($T$) du câble (20), la vitesse moyenne ($v$) du câble (20), la distance entre deux véhicules (2) successifs, et la masse moyenne ($m$) transportée par les véhicules (2).

3. Procédé de contrôle (200) selon la revendication précédente, au cours duquel l'étape de génération de la base de données (202) comprend une deuxième sous-étape d'extrapolation (202.2) des données obtenues lors de la première sous-étape d'échantillonnage (202.1) pour compléter la base de données.

4. Procédé de contrôle (200) selon la revendication 2 ou la revendication 3, au cours duquel la première sous-étape d'échantillonnage (202.1) est opérée lorsque l'installation de transport (100) de véhicules (2) par un câble (20) à mouvement continu fonctionne en régime permanent.

5. Procédé de contrôle (200) selon l'une des revendications précédentes, comprenant une étape de comparaison (204) entre la valeur d'oscillation (AC) et une valeur seuil (VS) au-dessus de laquelle une oscillation est interdite et en dessous de laquelle une oscillation est autorisée.

6. Procédé de contrôle (200) selon l'une quelconque des revendications précédentes, au cours duquel l'étape de réduction de l'oscillation (203) comprend une sous-étape d'optimisation (203.3) d'un premier paramètre à faire varier parmi le ou les paramètres à faire varier pour que la valeur de l'oscillation soit minimale.

7. Procédé de contrôle (200) selon la revendication précédente en combinaison avec la revendication 5, au cours duquel la sous-étape d'optimisation (203.3) est directement opérée après l'étape de comparaison (204) lorsque la valeur d'oscillation (AC) est inférieure à la valeur seuil (VS).

8. Procédé de contrôle (200) selon l'une quelconque des revendications 6 à 7 en combinaison avec la revendication 5, au cours duquel l'étape de réduction de l'oscillation (203) comprend une sous-étape d'amélioration (203.1) du premier paramètre à faire varier en choisissant une valeur du premier paramètre à faire varier dans la base de données lorsque la valeur d'oscillation (AC) est supérieure à la valeur seuil (VS) afin d'amener la valeur d'oscillation (AC) à une valeur inférieure à la valeur seuil (VS), la sous-étape d'amélioration (203.1) étant effectuée avant la sous-étape d'optimisation (203.3).

9. Procédé de contrôle (200) selon l'une quelconque des revendications 6 à 8, au cours duquel l'étape de réduction de l'oscillation (203) comprend une sous-étape d'ajustement (203.8) du premier paramètre à faire varier pour amener la valeur du premier paramètre à faire varier à la valeur optimisée.

10. Procédé de contrôle (200) selon l'une quelconque des revendications 6 à 9, au cours duquel l'étape de réduction (203) de l'oscillation comprend une sous-étape de vérification (203.9) de la possibilité d'atteindre la valeur optimisée du premier paramètre à faire varier, et, dans la négative, d'ajustement d'un autre paramètre parmi le ou les paramètres à faire varier.

11. Procédé de contrôle (200) selon l'une quelconque des revendications 6 à 10, comprenant une étape d'enregistrement de la valeur optimisée du premier paramètre à faire varier en fonction d'une valeur de consigne du premier paramètre à faire varier pour générer une bibliothèque de données.

12. Procédé de contrôle (200) selon l'une quelconque des revendications précédentes, au cours duquel le ou les paramètres à faire varier sont constitués par la vitesse moyenne ($v$) du câble (20) et/ou la tension moyenne ($T$) du câble (20).

13. Dispositif d'apprentissage et de correction (4) pour une installation de transport de véhicules par câble à mouvement continu (100) comprenant au moins un système de calcul configuré pour mettre en œuvre le procédé de contrôle (200) selon l'une des revendication 1 à 12.

**14.** Installation de transport de véhicules par un câble à mouvement continu (100) comprenant au moins un dispositif d'apprentissage et de correction (4) selon la revendication précédente.

**15.** Programme d'ordinateur comprenant des portions de codes de programme pour l'exécution des étapes du procédé de contrôle (200) d'une installation de transport de véhicules par câble à mouvement continu (100) selon l'une des revendications 1 à 12, lorsque ledit programme est exécuté sur un ordinateur.

**Patentansprüche**

**1.** Steuerverfahren (200) einer Anlage (100) zum Befördern von Fahrzeugen (2) durch mindestens ein Seil (20) mit kontinuierlicher Bewegung, das Verfahren umfassend:

- einen Schritt eines Bestimmens mindestens einer Schwingung (201) des Seils (20) und/oder mindestens eines der Fahrzeuge (2) in Abhängigkeit von mindestens einem Parameter, der unter den folgenden Parametern ausgewählt ist: einer mittleren Spannung ($T$) des Seils (20), einer mittleren Geschwindigkeit (v) des Seils (20), einem Abstand ($d$) zwischen zwei aufeinanderfolgenden Fahrzeugen und einer mittleren Masse (m), die durch die Fahrzeuge (2) befördert wird,
- einen Schritt eines Erzeugens einer Datenbank (202), die einen Schwingungswert ($AC$) mit einer Kombination aus der mittleren Spannung ($T$) des Seils (20), der mittleren Geschwindigkeit ($v$) des Seils (20), dem Abstand ($d$) zwischen zwei aufeinanderfolgenden Fahrzeugen (2) und der mittleren Masse ($m$) verbindet, die durch die Fahrzeuge (20) befördert wird, und
- einen Schritt eines Verringerns der Schwingung (203), indem einer oder mehrere zu variierende Parameter unter den Parametern variiert werden, gemäß der Datenbank (202).

**2.** Steuerverfahren (200) nach dem vorstehenden Anspruch, bei dem der Schritt des Erzeugens der Datenbank (202) einen ersten Unterschritt eines Abtastens (202.1) von Schwingungen umfasst, wobei jede Schwingung mit einer Messung der mittleren Spannung ($T$) des Seils (20), der mittleren Geschwindigkeit ($v$) des Seils (20), dem Abstand zwischen zwei aufeinanderfolgenden Fahrzeugen (2) und der mittleren Masse ($m$) verknüpft ist, die durch die Fahrzeuge (2) befördert wird.

**3.** Steuerverfahren (200) nach dem vorstehenden Anspruch, bei dem der Schritt des Erzeugens der Datenbank (202) einen zweiten Unterschritt eines Extrapolierens (202.2) von Daten, die während des ersten Unterschritts des Abtastens (202.1) erhalten werden, zum Vervollständigen der Datenbank umfasst.

**4.** Steuerverfahren (200) nach Anspruch 2 oder 3, bei dem der erste Unterschritt des Abtastens (202.1) vorgenommen wird, wenn die Anlage (100) zum Befördern von Fahrzeugen (2) durch ein Seil (20) mit kontinuierlicher Bewegung in einem Dauerzustand läuft.

**5.** Steuerverfahren (200) nach einem der vorstehenden Ansprüche, umfassend einen Schritt eines Vergleichens (204) zwischen dem Schwingungswert ($AC$) und einem Schwellenwert (VS), oberhalb dessen eine Schwingung verboten ist und unterhalb dessen eine Schwingung erlaubt ist.

**6.** Steuerverfahren (200) nach einem der vorstehenden Ansprüche, bei dem der Schritt des Verringerns der Schwingung (203) einen Unterschritt eines Optimierens (203.3) eines ersten zu variierenden Parameters unter dem oder den zu variierenden Parametern umfasst, damit der Schwingungswert minimal ist.

**7.** Steuerverfahren (200) nach dem vorstehenden Anspruch in Kombination mit Anspruch 5, bei dem der Unterschritt des Optimierens (203.3) nach dem Schritt des Vergleichens (204) direkt vorgenommen wird, wenn der Schwingungswert ($AC$) niedriger als der Schwellenwert (VS) ist.

**8.** Steuerverfahren (200) nach einem der Ansprüche 6 bis 7 in Kombination mit Anspruch 5, bei dem der Schritt des Verringerns der Schwingung (203) einen Unterschritt eines Verbesserns (203.1) des ersten zu variierenden Parameters umfasst, indem ein Wert des ersten zu variierenden Parameters in der Datenbank ausgewählt wird, wenn der Schwingungswert ($AC$) höher als der Schwellenwert (VS) ist, um den Schwingungswert ($AC$) auf einen Wert zu bringen, der niedriger als der Schwellenwert (VS) ist, wobei der Unterschritt des Verbesserns (203.1) vor dem Unterschritt des Optimierens (203.3) getätigt wird.

**9.** Steuerverfahren (200) nach einem der Ansprüche 6 bis 8, bei dem der Schritt des Verringerns der Schwingung (203) einen Unterschritt eines Anpassens (203.8) des ersten zu variierenden Parameters zum Bringen des Werts des ersten zu variierenden Parameters auf den optimierten Wert umfasst.

**10.** Steuerverfahren (200) nach einem der Ansprüche 6 bis 9, bei dem der Schritt des Verringerns (203) der Schwingung einen Unterschritt eines Prüfens (203.9) der Möglichkeit, den optimierten Wert des ersten zu variierenden Parameters zu erreichen, und, falls dies nicht der Fall ist, des Anpassens eines anderen Parameters unter dem oder den zu variierenden Parametern umfasst.

11. Steuerverfahren (200) nach einem der Ansprüche 6 bis 10, umfassend einen Schritt eines Eintragens des optimierten Werts des ersten zu variierenden Parameters in Abhängigkeit von einem Sollwert des ersten zu variierenden Parameters zum Erzeugen einer Datenbibliothek.

12. Steuerverfahren (200) nach einem der vorstehenden Ansprüche, bei dem der oder die zu variierenden Parameter aus der mittleren Geschwindigkeit (v) des Seils (20) und/oder der mittleren Spannung (T) des Seils (20) bestehen.

13. Lern- und Korrekturvorrichtung (4) für eine Anlage (100) zum Befördern von Fahrzeugen durch das Seil mit kontinuierlicher Bewegung, umfassend mindestens ein Rechensystem, das zum Durchführen des Steuerverfahrens (200) nach einem der Ansprüche 1 bis 12 konfiguriert ist.

14. Anlage zum Befördern von Fahrzeugen durch ein Seil mit kontinuierlicher Bewegung (100), umfassend mindestens eine Lern- und Korrekturvorrichtung (4) nach dem vorstehenden Anspruch.

15. Computerprogramm, umfassend Teile von Programmcodes zum Ausführen der Schritte des Steuerverfahrens (200) einer Anlage zum Befördern von Fahrzeugen durch das Seil mit kontinuierlicher Bewegung (100) nach einem der Ansprüche 1 bis 12, wenn das Programm auf einem Computer ausgeführt wird.

**Claims**

1. Method (200) for controlling a facility (100) for transporting vehicles (2) using at least one continuously moving cable (20), the method comprising:

    - a step (201) of determining at least one oscillation of the cable (20) and/or of at least one of the vehicles (2) on the basis of at least one parameter chosen from the following parameters: an average tension (T) of the cable (20), an average speed (v) of the cable (20), a distance (d) between two successive vehicles, and an average mass (m) transported by the vehicles (2),
    - a step (202) of generating a database which links an oscillation value (AC) to a combination of the average tension (T) of the cable (20), the average speed (v) of the cable (20), the distance

(d) between two successive vehicles (2), and the average mass (m) transported by the vehicles (20), and
    - a step (203) of reducing the oscillation by varying one or more parameters to be varied among the parameters according to the database (202).

2. Control method (200) according to the preceding claim, during which the step (202) of generating the database comprises a first oscillation sampling sub-step (202.1), each oscillation being associated with a measurement of the average tension (T) of the cable (20), the average speed (v) of the cable (20), the distance between two successive vehicles (2), and the average mass (m) transported by the vehicles (2).

3. Control method (200) according to the preceding claim, during which the step (202) of generating the database comprises a second sub-step (202.2) of extrapolating the data obtained during the first sampling sub-step (202.1) to complete the database.

4. Control method (200) according to either claim 2 or claim 3, during which the first sampling sub-step (202.1) is carried out when the facility (100) for transporting vehicles (2) using a continuously moving cable (20) operates in steady state.

5. Control method (200) according to any of the preceding claims, comprising a step (204) of comparing the oscillation value (AC) and a threshold value (VS) above which an oscillation is prohibited and below which an oscillation is permitted.

6. Control method (200) according to any of the preceding claims, during which the step (203) of reducing the oscillation comprises a sub-step (203.3) of optimizing a first parameter to be varied among the parameter or parameters to be varied so that the oscillation value is minimal.

7. Control method (200) according to the preceding claim in combination with claim 5, during which the optimization sub-step (203.3) is carried out directly after the comparison step (204) when the oscillation value (AC) is smaller than the threshold value (VS).

8. Control method (200) according to either claim 6 or claim 7 in combination with claim 5, during which the step (203) of reducing the oscillation comprises a sub-step (203.1) of improving the first parameter to be varied by choosing a value of the first parameter to be varied from the database when the oscillation value (AC) is greater than the threshold value (VS) in order to bring the oscillation value (AC) to a value smaller than the threshold value (VS), the improvement sub-step (203.1) being performed before the optimization sub-step (203.3).

9.  Control method (200) according to any of claims 6 to 8, during which the step (203) of reducing the oscillation comprises a sub-step (203.8) of adjusting the first parameter to be varied in order to bring the value of the first parameter to be varied to the optimized value.

10. Control method (200) according to any of claims 6 to 9, during which the step (203) of reducing the oscillation comprises a sub-step (203.9) of checking the possibility of reaching the optimized value of the first parameter to be varied and, in the negative, of adjusting another parameter among the parameter or parameters to be varied.

11. Control method (200) according to any of claims 6 to 10, comprising a step of recording the optimized value of the first parameter to be varied on the basis of a setpoint value of the first parameter to be varied in order to generate a data library.

12. Control method (200) according to any of the preceding claims, during which the parameter or parameters to be varied consist of the average speed ($v$) of the cable (20) and/or the average tension ($T$) of the cable (20).

13. Learning and correction device (4) for a facility (100) for transporting vehicles using a continuously moving cable, comprising at least one computing system which is configured to implement the control method (200) according to any of claims 1 to 12.

14. Facility (100) for transporting vehicles using a continuously moving cable, comprising at least one learning and correction device (4) according to the preceding claim.

15. Computer program comprising portions of program codes for carrying out the steps of the method (200) for controlling a facility (100) for transporting vehicles using a continuously moving cable according to any of claims 1 to 12 when said program is executed on a computer.

EP 3 878 707 B1

Fig. 1

100

10
17  11  8
4
15
5
100a
14  16 12
9
3a

20  9  19 15
7  13  4  6  100b
1  5  14
2  18  10
3b

Fig. 2

200

201
202
202.1  202.2
204
203
203.1  203.2  203.9  $v_{ref,n}$
203.3
203.8  $v_{optim}$
203.7
203.6
203.5
203.4

17

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0618380 A